# EUROPEAN PATENT APPLICATION

(11) **EP 2 953 036 A1**
(43) Date of publication of application: **09.12.2015**
(21) Application number: 13873580.8
(22) Date of filing: 24.09.2013
(51) Int. Cl.: G06F 17/21, G06F 17/30

(54) **FILE TRIMMING METHOD, TERMINAL AND SERVER**

(30) Priority: 31.01.2013 CN 201310039296
(71) Applicant: Xiaomi Inc., Beijing 100085 (CN)
(72) Inventor: QIU, Ruiheng, Beijing 100085 (CN)
(74) Representative: Fontenelle, Sandrine
(86) International application number: PCT/CN2013/084122
(87) International publication number: WO 2014/117532

(57) **Abstract**

Disclosed are a file trimming method, terminal and server, belonging to the technical field of computers, and particularly relating to the field of electronic file display. The method comprises: sending a file identifier of a corresponding file, and the file comprising at least one page; receiving a trimming data packet fed back according to the file identifier, and the trimming data packet comprising trimming data of at least one page in the file; and trimming the file according to the trimming data packet. The terminal comprises a first sending module, a first receiving module and a trimming module. The server comprises a third receiving module, a first detecting module and a feedback module. By adopting the file trimming method, the problem that the trimming area of each page in the file needs to be detected in real time according to an algorithm to occupy a large amount of resources in the trimming operation of the file is solved, and an effect of improving the trimming efficiency of the file is improved.

## Description

### CROSS-REFERENCE TO RELATED APPLICATIONS

This application is filed and claims the priority to Chinese Patent Application No. 201310039296.3 filed on January 31, 2013, the entire contents of which are incorporated herein by reference.

### TECHNICAL FIELD

The present invention relates to the technical field of computers, especially relates to the field of displaying electronic files, and more particularly relates to a method, a terminal and a server for trimming margin(s) of a file.

### BACKGROUND

PDF (Portable Document Format) is an electronic file format fitting for all operating systems. Thereby, PDF becomes a desirable document format for issuing electronic files on Internet and broadcasting digital information.

When reading a PDF file on a terminal, since the PDF file has a certain blank page margin which occupies a part of an interface display area of the terminal, the area for displaying text portions becomes small, and thus the reading effect may be affected. It is especially serious in the circumstances of using portable terminals with small screen display areas, such as a smart phone, an MP3, an MP4 or an e-book reader. To enlarge the area for displaying the text portion of the PDF file of the terminal, the terminal may detect the text portion on each page of the PDF file, verify and correct the text edge based on the detected text portion, and cut the blank page margin so as to only display the text portion of the page, in this way, the area for displaying the text portion is enlarged.

Since the blank page margins on respective pages of the PDF file may be different, the terminal is required to detect the display areas on each page of the PDF file in real time according to an algorithm. In this case, a large amount of resources are consumed by the operation of trimming the margins of the PDF file, which reduces the effect of trimming the margins of the PDF file. Taking a mid-to low-end mobile phone as an example, since the computing resource of such mobile phone is limited, the procedure of trimming the margins of the whole PDF file runs slow, and it generally may take several seconds to switch the current page to the next page with margin trimmed, which is inefficient.

### SUMMARY

In order to solve the problem that a large amount of resources are consumed by the operation of trimming the margin of the PDF file due to the fact that a margin to be trimmed on each page of the PDF file needs to be detected by the terminal in real time according to an algorithm, the embodiments of the present invention provide a method, a terminal and a server for trimming margins of a file. The technical solutions are:
According to one aspect, a method for trimming margins of a file is provided, the method includes:
   sending a filespecification corresponding to a file including at least one page;
   receiving a data package for trimming margins fed back according to the filespecification, the data package for trimming margins including a margin trimming data of at least one page of the file; and
   trimming the margins of the file according to the data package for trimming margins.

According to another aspect, a method for trimming margins of a file is provided, the method includes:
receiving a filespecification corresponding to a file including at least one page;
detecting whether a data package for trimming margins of the file corresponding to the filespecification is present, the data package for trimming margins including a margin trimming data of at least one page of the file; and
feeding back the data package for trimming margins if detecting that the data package for trimming margins of the file corresponding to the filespecification is present.

According to still another aspect, a terminal is provided, the terminal includes:
a first sending module configured for sending a filespecification corresponding to a file including at least one page;
a first receiving module configured for receiving a data package for trimming margins fed back according to the filespecification sent by the first sending module, the data package for trimming margins including a margin trimming data of at least one page of the file; and
a margin trimming module configured for trimming the margins of the file according to the data package for trimming margins received by the first receiving module.

According to still another aspect, a server is provided, the server includes:
a third receiving module configured for receiving a filespecification corresponding to a file including at least one page;
a first detecting module configured for detecting whether a data package for trimming margins of the file corresponding to the filespecification received by the third receiving module is present locally, the data package for trimming margins including a margin trimming data of at least one page of the file; and
a feedback module configured for feeding back the data package for trimming margins if the first detecting module detects that the data package for trimming margins of the file corresponding to the filespecification is present locally.

The technical solutions provided by the embodiments of the present invention may have the following advantageous effects:
The present invention can directly trim the margins of the file according to the received data package for trimming margins by the following steps of sending a filespecification corresponding to a file; receiving a data package for trimming margins fed back according to the filespecification, the data package for trimming margins including a margin trimming data of at least one page of the file; and trimming the margins of the file according to the data package for trimming margins, which solves the problem that a large amount of resources are consumed by the operation of trimming the margins of the file due to the fact that a margin to be trimmed on each page of the file needs to be detected in real time according to an algorithm, thereby improving the efficiency of trimming the margins of the file.

It should be understood, both the foregoing general description and following detailed description are merely illustrative, and not are used for limiting the invention.

### BRIEF DESCRIPTION OF THE DRAWINGS

In order to illustrate the technical solutions of the embodiments in the present invention more clearly, the drawings required to be used for describing the embodiments are introduced below briefly, obviously, the drawings described below only show some embodiments of the present invention, and for those skilled in the art, other drawings can also be obtained from these drawings without paying inventive labor.
Fig. 1 is an illustrative flowchart of a method for trimming margins of a file provided by an embodiment 1 of the present invention;
Fig. 2 is an illustrative flowchart of a method for trimming margins of a file provided by an embodiment 2 of the present invention;
Fig. 3 is an illustrative flowchart of a method for trimming margins of a file provided by an embodiment 3 of the present invention;
FIG. 4 is a structural schematic diagram of a terminal provided by an embodiment 4 of the present invention;
FIG. 5 is a structural schematic diagram of a server provided by an embodiment 5 of the present invention; and
FIG. 6 is a structural schematic diagram of a system for trimming file margin provided by an embodiment 6 of the present invention.

### DETAILED DESCRIPTION OF THE EMBODIMENTS

For making the objects, technical solutions and advantages of the present invention more clear, detailed description of embodiments in the present invention will be given below with reference to the accompanying drawings.

### Embodiment 1

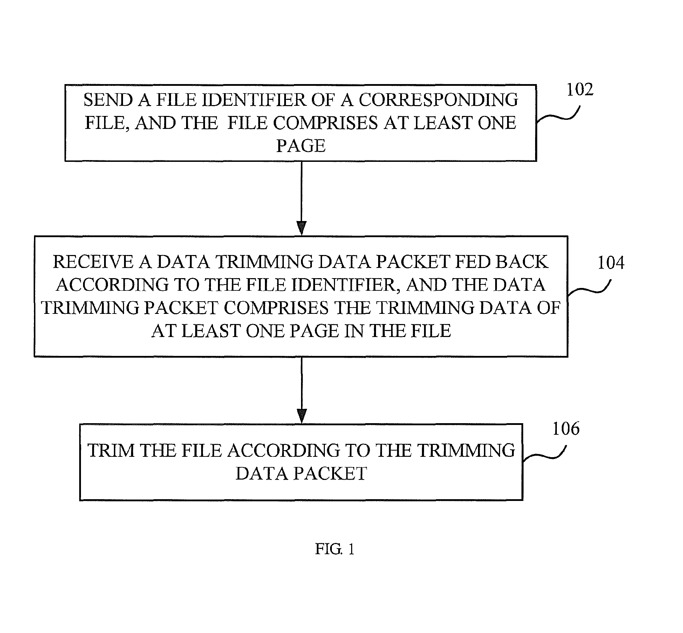

Referring to FIG. 1, which shows a flowchart of a method for trimming margins of a file provided by the embodiment 1 of the present invention, the method for trimming the margins of the file may be applied to a system including a terminal and a server, and the terminal may be a smart TV, a smart phone, a tablet computer or the like. The embodiment of the present invention will be explained by using an example that the method is applied to the terminal, and the method for trimming the margins of the file includes:
Step 102: sending a filespecification corresponding to a file including at least one page;
   wherein, the terminal sends the filespecification to the server, and the filespecification can be used for uniquely identifying a file.
Step 104: receiving a data package for trimming margins fed back according to the filespecification, the data package for trimming margins including a margin trimming data of at least one page of the file;
   wherein, after receiving the filespecification corresponding to the file sent by the terminal, the server feeds back the data package for trimming margins to the terminal, and the terminal receives the data package for trimming margins fed back by the server. The data package for trimming margins is a data package for trimming margins corresponding to the file and can be used for trimming the margins of the file. In the case that the file contains at least one page, the data package for trimming margins may include a margin trimming data of at least one page of the file.
Step 106: trimming the margins of the file according to the data package for trimming margins.

The terminal may trim the margins of the file according to the margin trimming data in the data package for trimming margins, and display the margin-trimmed file.

To sum up, the method for trimming margins of a file provided by the embodiment of the present invention may directly trim the margins of the file according to the received data package for trimming margins by the following steps of sending a filespecification corresponding to a file; receiving a data package for trimming margins fed back according to the filespecification, the data package for trimming margins including a margin trimming data of at least one page of the file; and trimming the margins of the file according to the data package for trimming margins, which solves the problem that a large amount of resources are consumed by the operation of trimming the margins of the file due to the fact that a margin to be trimmed on each page of the file needs to be detected in real time according to an algorithm, thereby improving the efficiency of trimming the margins of the file.

### Embodiment 2

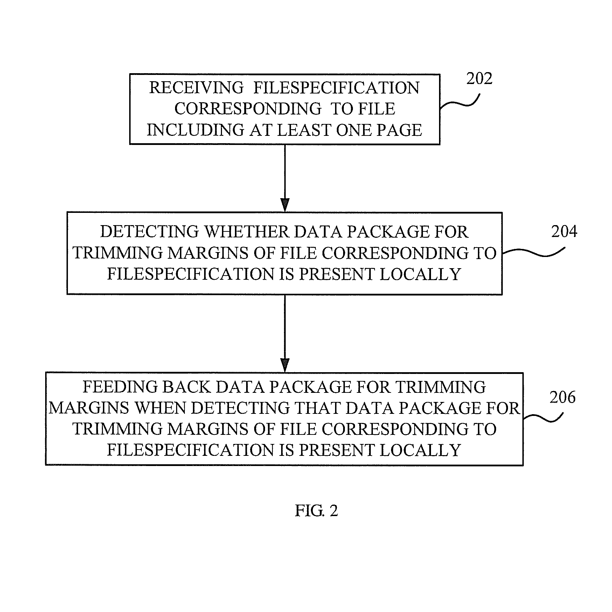

Referring to FIG. 2, which shows a flowchart of a method for trimming margins of a file provided by the embodiment 2 of the present invention, the method for trimming the margins of the file may be applied to a system including a terminal and a server, and the terminal may be a smart TV, a smart phone, a tablet computer or the like. The embodiment of the present invention will be explained by using an example that the method is applied to the server, and the method for trimming the margins of the file includes:
Step 202: receiving a filespecification corresponding to a file including at least one page;
   wherein, the server receives the filespecification sent from the terminal, and the filespecification can be used for uniquely identifying a file.
Step 204: detecting whether a data package for trimming margins of the file corresponding to the filespecification is present locally, if it is detected that the data package for trimming margins of the file corresponding to the filespecification is present locally, performing step 206; and if it is detected that the data package for trimming margins of the file corresponding to the filespecification is not present locally, terminating the procedure;
   wherein, the server pre-stores the data packages for trimming margins of at least one file, and the data package for trimming margins includes a margin trimming data of at least one page of the file. For example, the data package for trimming margins can be found by utilizing the filespecification corresponding to the file. If the server detects that the data package for trimming margins of the file corresponding to the received filespecification is present locally, step 206 is performed; and if the server detects that the data package for trimming margins of the file corresponding to the received filespecification is not present locally, it feeds back to the terminal that there is no data package for trimming margins of the file corresponding to the filespecification, and the procedure terminates.
Step 206: feeding back the data package for trimming margins.

The server feeds back the searched data package for trimming margins to the terminal, such that the terminal trims the margins of the file according to the data package for trimming margins.

To sum up, the method for trimming margins of a file provided by the embodiment of the present invention solves the problem that a large amount of resources are consumed by the operation of trimming the margins of the file due to the fact that a margin to be trimmed on each page of the file needs to be detected in real time according to an algorithm, thereby improving the efficiency of trimming the margins of the file, by the steps of receiving a filespecification corresponding to a file; detecting whether a data package for trimming margins of the file corresponding to the filespecification is present locally; if it is detected that the data package for trimming margins of the file corresponding to the filespecification is present locally, feeding back the data package for trimming margins such that the terminal trims the margins of the file according to the data package for trimming margins.

### Embodiment 3

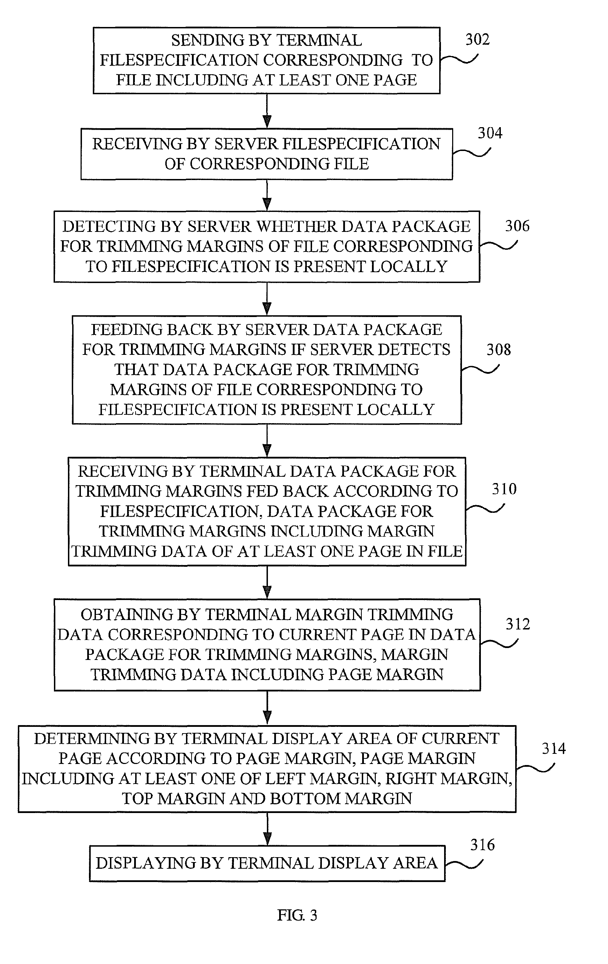

Referring to FIG. 3, which shows a flowchart of a method for trimming margins of a file provided by the embodiment 3 of the present invention, the method for trimming the margins of the file may be applied to a system including a terminal and a server, and the terminal may be a smart TV, a smart phone, a tablet computer or the like. In combination with embodiment 1 and embodiment 2, this embodiment of the present invention will be explained by using an example that the method is applied to the server and the terminal at the same time, and the server in this embodiment of the present invention generates a data package for trimming margins by receiving a page information collected by the terminal, and then feeds back the data package for trimming margins to the terminal. The method for trimming the margins of the file includes:
Step 302: sending by the terminal a filespecification corresponding to a file including at least one page;
   wherein, the terminal sends the filespecification corresponding to the file to the server, and the filespecification can be used for uniquely identifying a file. For example, the filespecification may be a numeral value calculated according to an encryption algorithm. For example, the encryption algorithm may be an MD5 (Message-Digest Algorithm 5), in this case, a MD5 calculation may be performed to the file name of the file, and a MD5 value obtained by the calculation is used as the filespecification. Certainly, the filespecification may also be obtained by other methods, which is not restricted by the embodiments of the present invention.

For example, the file may be a PDF file, and the file may include at least one page. In the case that the file includes multiple pages, each page of the file may be identified by its page number.
Step 304: receiving by the server the filespecification corresponding to the file;
   in the embodiment of the present invention, the terminal sends the filespecification to the server for requesting a data package for trimming margins of the file corresponding to the filespecification. Thereby, before receiving the filespecification, the server needs to collect a page information of the file and generate a data package for trimming margins of the file according to the page information, so as to feed back the data package for trimming margins to the terminal. The data package for trimming margins may include a margin trimming data of at least one page of the file, the margin trimming data may include a page margin, and the page margin may include at least one of a left margin, a right margin, a top margin and a bottom margin.

Preferably, before receiving the filespecification corresponding to the file, the method may further include:
Receiving a page information of at least one page, wherein the page information includes the filespecification corresponding to the file which includes the page, a page number of the page and a final margin trimming data of the page;
detecting for the page information of each page whether the filespecification in the page information is present locally;
if it is detected that the filespecification in the page information is present locally, adding the final margin trimming data of the page to a final margin trimming data set of the page according to the filespecification and the page number; and
generating a margin trimming data of the page according to the final margin trimming data set of the page.

Since different pages of the file have different page margins, the server needs to collect the final margin trimming data of each page, and generate the margin trimming data of the corresponding page according to the final margin trimming data. Preferably, the server may collect the final margin trimming data of the same page of the same file from at least one terminal, combine these final margin trimming data into the final margin trimming data set, and generate the margin trimming data of the page according to the final margin trimming data set, thereby improving the accuracy of the margin trimming data.

Therefore, to identify the page corresponding to the final margin trimming data, the filespecification corresponding to the file which includes the page and the page number of the page may also be added to the page information including a group of final margin trimming data, such that the server may detect whether the filespecification is present locally after obtaining the filespecification in the page information, and if the server detects that the filespecification is present locally, it adds the final margin trimming data of the page to the final margin trimming data set of the page according to the page number in a buffer corresponding to the filespecification, and generates the margin trimming data of the page according to the final margin trimming data set. Preferably, if the file includes multiple pages, the terminal may send the page information of the plurality of pages to the server together to save transmission resource.

For example, the margin trimming data includes a page margin, and the page margin includes at least one of a left margin, a right margin, a top margin and a bottom margin. In this case, the step of generating the margin trimming data of the page according to the final margin trimming data set of the page may include: calculating average values of the final margin trimming data corresponding to each kind of page margin in the final margin trimming data set of the page, so as to obtain the margin trimming data of the page.

Since each group of the final margin trimming data includes at least one of the left margin, the right margin, the top margin and the bottom margin, when generating the margin trimming data according to the final margin trimming data set, the average values of the final margin trimming data corresponding to each kind of the page margin may be calculated respectively, thereby further improving the accuracy of the margin trimming data.

There are a variety of methods for calculating the margin trimming data of the page, for example, the margin trimming data of the page may be generated according to the final margin trimming data set, or the margin trimming data may be generated by removing the largest group of the final margin trimming data and the smallest group of the final margin trimming data from the final margin trimming data set, which is not restricted by the embodiments of the present invention.

The embodiment of the present invention will be explained by using an example of generating the margin trimming data of the page according to the final margin trimming data set. For example, in a final margin trimming data set of page 3 of file 1, a first group of the final margin trimming data is (300, 80, 300, 80), a second group of the final margin trimming data is (320, 95, 315, 70), a third group of the final margin trimming data is (290, 79, 295, 86) and a fourth group of the final margin trimming data is (290, 84, 302, 74), and in each group of the final margin trimming data, the first value is the left margin, the second value is the top margin, the third value is the right margin and the fourth value is the bottom margin. In this case, the margin trimming data corresponding to the left margin can be calculated according to the first value 300, 320, 290 and 290 in each group of the final margin trimming data, i.e., (300+320+290+290)/4 = 300. Similarly, the margin trimming data corresponding to the top margin, the margin trimming data corresponding to the right margin, and the margin trimming data corresponding to the bottom margin can be respectively calculated to be 84.5, 303, and 77.5. Thereby, the margin trimming data of the page calculated by the server is (300, 84.5, 303, 77.5). If the file is a PDF file, the unit of the margin trimming data is a logical unit of the page defined in the PDF specification, for example, the page is defined to be 800x600. When displaying the PDF file on the terminal, size of each logical unit can be calculated according to the actual size of the display interface of the terminal, for example, the calculated logical unit may be 1/72 inch, 1/86 inch and so on, which is not restricted by the embodiments in the present invention.

Preferably, in order to avoid the phenomena that the collected final margin trimming data are inaccurate due to mis-operation, after trimming the margin of the page according to the final margin trimming data, it may also be possible to collect reading time for reading the page and then filter the final margin trimming data according to the reading time, so as to remove the final margin trimming data generated by mis-operation.

Preferably, before receiving the filespecification corresponding to the file, the method further includes:
receiving a page information of at least one page, wherein the page information includes the filespecification corresponding to the file which includes the page, the page number of the page, the final margin trimming data of the page, and the reading time for reading the page with margins trimmed according to the final margin trimming data of the page;
detecting for the page information of each page whether the filespecification in the page information is present locally;
if it is detected that the filespecification in the page information is present locally, adding the final margin trimming data of the page to the final margin trimming data set of the page, and adding the reading time to a reading time set corresponding to the final margin trimming data according to the filespecification and the page number; and
generating the margin trimming data of the page according to the final margin trimming data set and the reading time set of the page.

For example, the server may also remove the final margin trimming data generated by mis-operation according to the reading time set. Before the step of generating the margin trimming data of the page according to the final margin trimming data set and the reading time set of the page, the method may further include:
removing the reading time that does not exceed a preset threshold value from the reading time set; and
removing the final margin trimming data corresponding to the reading time that does not exceed the preset threshold value from the final margin trimming data set.

The preset threshold value may be a threshold value which is set in advance. If the server detects that the reading time is less than the threshold value, it means the reading time for reading the page is short, thus the final margin trimming data corresponding to the reading time is a final margin trimming data generated by mis-operation; and if the server detects that the reading time is larger than or equal to the threshold value, it means the reading time for reading the page is long, thus the final margin trimming data is not a final margin trimming data generated by mis-operation. For example, the threshold value may be manually set, such as 5 seconds. In this case, the server removes the final margin trimming data corresponding to the reading time which is less than 5 seconds from the final margin trimming data set, so as to avoid the final margin trimming data generated by mis-operation affecting the accuracy of the margin trimming data.

For example, the margin trimming data includes a page margin, and the page margin includes at least one of a left margin, a right margin, a top margin and a bottom margin. In this case, the step of generating the margin trimming data of the page according to the final margin trimming data set and the reading time set of the page may include:
multiplying each group of the final margin trimming data with the reading time corresponding to the final margin trimming data, and calculating average values of the final margin trimming data corresponding to each kind of the page margin in the multiplied final margin trimming data set respectively, so as to obtain the margin trimming data of the page; or calculating average values of the final margin trimming data corresponding to each kind of the page margin in the final margin trimming data set of the page respectively, so as to obtain the margin trimming data of the page.

There are a variety of methods for generating the margin trimming data of the page, for example, the margin trimming data of the page can be generated according to the final margin trimming data set obtained by multiplying the final margin trimming data with the reading time; or the margin trimming data of the page can be generated according to the final margin trimming data set; or the margin trimming data of the page can be obtained after removing the largest group of the final margin trimming data and the smallest group of the final margin trimming data from the final margin trimming data set, which is not restricted by the embodiments of the present invention.

Preferably, the embodiment of the present invention will be explained by using an example that the server generates the margin trimming data according to the final margin trimming data and the reading time corresponding to the final margin trimming data. For example, in a final margin trimming data set and a reading time set of page 3 in file 1, a first group of the final margin trimming data is (300, 80, 300, 80) and a first group of the reading time is 40 seconds; a second group of the final margin trimming data is (320, 95, 315, 70) and a second group of the reading time is 48 seconds; a third group of the final margin trimming data is (290, 79, 295, 86) and a third group of the reading time is 32 seconds; a fourth group of the final margin trimming data is (290, 84, 302, 74) and a fourth group of the reading time is 40 seconds, and in each group of the final margin trimming data, the first value is the left margin, the second value is the top margin, the third value is the right margin and the fourth value is the bottom margin. In this case, the margin trimming data corresponding to the left margin can be calculated according to the first value of each group of the final margin trimming data and the reading time corresponding to the first value, i.e., (300x40+320x48+290x32+290x40) / (40+48+32+40) = 311.8125. Similarly, the margin trimming data corresponding to the top margin, the margin trimming data corresponding to the right margin, and the margin trimming data corresponding to the left margin can be calculated respectively to be 85.3, 304, and 76.7. Thereby, the margin trimming data of the page calculated by the server is (311.8125, 85.3, 304, 76.7).
Step 306: detecting by the server whether the data package for trimming margins of the file corresponding to the filespecification is present locally, if it is detected that the data package for trimming margins of the file corresponding to the filespecification is present locally, performing step 308; and if it is detected that the data package for trimming margins of the file corresponding to the filespecification is not present locally, terminating the procedure.
   wherein, if the server detects that the data package for trimming margins of the file corresponding to the received filespecification is present locally, step 308 is performed; and if the server detects that the data package for trimming margins of the file corresponding to the received filespecification is not present locally, it feeds back to the terminal that there is no data package for trimming margins of the file corresponding to the filespecification, and the procedure terminates.
Step 308: feeding back by the server the data package for trimming margins;

In the embodiment of the present invention, the server sends the data package for trimming margins detected according to the filespecification to the terminal, such that the terminal trims the margins of the file according to the data package for trimming margins.
Step 310: receiving by the terminal the data package for trimming margins fed back according to the filespecification, the data package for trimming margins including margin trimming data of the at least one page in the file;
Step 312: obtaining by the terminal the margin trimming data corresponding to the current page from the data package for trimming margins, the margin trimming data including a page margin;
   wherein, the terminal may obtain the margin trimming data corresponding to a page number of the current page from the data package for trimming margins according to the page number. The margin trimming data includes a page margin, namely data in the margin trimming data are the distances between a text portion and a page sideline.
Step 314: determining by the terminal a display area of the current page according to the page margin, the page margin including at least one of the left margin, the right margin, the top margin and the bottom margin;
   wherein, the terminal can determine the display area of the current page according to the current page and the page margin in the margin trimming data. For example, the current page is 800x600, and the margin trimming data is (300, 84.5, 303, 77.5). In this case, if taking a center of the current page as an origin of coordinate, and taking a length and a width of the current page as X-axis and Y-axis, respectively, the display area of the current page is an area surrounded by a first line of X=-100, a second line of Y=215.5, a third line of X=97 and a fourth line of Y=-222.5.
Step 316: displaying by the terminal the display area.

The terminal may directly display the display area; or the terminal may show the display effect of the display area and detect whether the display area is modified, and if it is detected that the display area is not modified, it displays the display area. Thereby, before the step of displaying the display area, the method may further include:
detecting whether the margin trimming data is modified;
   if it is detected that the margin trimming data is modified, receiving the modified margin trimming data; and
   determining the display area according to the page margin in the modified margin trimming data.

The method of determining the display area according to the page margins in the modified margin trimming data by the terminal is the same as the above-mentioned method, which is not repeated herein.

It should be explained supplementarily, after sending the filespecification corresponding to the file, the method may further include:
if no fed back data package for trimming margins is received, setting the margin trimming data of the current page, the margin trimming data including a page margin;
receiving the set margin trimming data;
determining the display area of the current page according to the page margin in the set margin trimming data, the page margin including at least one of the left margin, the right margin, the top margin and the bottom margin; and
displaying the display area.

If there is no final margin trimming data set corresponding to the filespecification in the server, or if the number of the groups of the final margin trimming data in the final margin trimming data set is too small to generate the margin trimming data of the page, the server may feed back to the terminal a notification message for notifying the terminal that the server does not have the data package for trimming margins of the file currently. After receiving the notification message, the terminal sets the margin trimming data of the current page, determines the display area of the current page according the set margin trimming data, and then displays the display area. The method of determining the display area according to the page margin in the set margin trimming data is the same as the above-mentioned method, which is not repeated herein.

For example, after displaying the display area, the terminal may further send the final margin trimming data corresponding to the display area to the server, so as to allow the server to re-generate the margin trimming data of the current page according to the margin trimming data. With regards to this, after the step of displaying the display area, the method may further include:
collecting the filespecification corresponding to the file which includes the current page, the page number of the current page and the final margin trimming data of the current page, the final margin trimming data being the margin trimming data corresponding to the display area; and
sending the page information which includes the filespecification, the page number and the final margin trimming data to the server, so as to allow the server to determine the current page according to the filespecification and the page number, and re-generate the margin trimming data of the current page according to the final margin trimming data.

If the margin trimming data is not modified, the final margin trimming data is the received margin trimming data; if the margin trimming data is modified, the final margin trimming data is the modified margin trimming data; and if no margin trimming data is received, the final margin trimming data is the set margin trimming data. For example, for saving transmission resource, if the margin trimming data is not modified, the terminal may not perform the step of sending the final margin trimming data to the server. Correspondingly, after receiving the page information including the filespecification corresponding to the file which includes the page, the page number of the page, and the final margin trimming data of the page, the server may generate the margin trimming data of the current page according to the page information. The detailed generating procedure is shown in step 304, which is not repeated herein.

Alternatively, in order to avoid the phenomenon that the collected final margin trimming data are inaccurate due to mis-operation, after trimming the margin of the page according to the final margin trimming data, it may also be possible to collect reading time for reading the page and then filter the final margin trimming data according to the reading time, so as to remove the final margin trimming data generated by mis-operation. With regard to this, after displaying the display area, the method may further include:
collecting the filespecification corresponding to the file which includes the current page, the page number of the current page, the final margin trimming data of the current page, and the reading time for reading the current page with margins trimmed according to the final margin trimming data, the final margin trimming data being the margin trimming data corresponding to the display area; and
sending the page information which includes the filespecification, the page number, the final margin trimming data and the reading time to the server, so as to allow the server to determine the current page according to the filespecification and the page number, and re-generate the margin trimming data of the current page according to the final margin trimming data and the reading time.

Correspondingly, after receiving the page information which includes the filespecification corresponding to the file which includes the page, the page number of the page, the final margin trimming data of the page, and the reading time of the page with margins trimmed according to the final margin trimming data of the page, the server may generate the margin trimming data of the current page according to the page information. The detailed generating procedure is shown in step 304, which is not repeated herein.

It should be explained supplementarily, the terminal may send the collected page information to the server at a suitable time. The suitable time may include, but not be limited to: an immediate time, a time point when the terminal connects to the server at the next time, a time point when the network is idle, a time point when the terminal accesses the WiFi (Wireless Fidelity), a time point when the terminal requests the data package for trimming margins from the server, and so on, which is not restricted by the embodiments of the present invention.

To sum up, the method for trimming margins of the file disclosed in the embodiment of the invention may directly trim the margins of the file according to the received data package for trimming margins by the following steps of sending a filespecification corresponding to a file to the server; receiving the data package for trimming margins fed back from the server according to the filespecification, the data package for trimming the margins including margin trimming data of at least one page of the file; and trimming margins of the file according to the data package for trimming margins, which solves the problem that a large amount of resources are consumed by the operation of trimming the margin of the file due to the fact that a margin to be trimmed on each page of the file needs to be detected in real time according to an algorithm, thereby improving the efficiency of trimming the margins of the file. Besides, the method solves the problem that the collected final margin trimming data are inaccurate due to the final margin trimming data generated by mis-operation, and improves the accuracy of the margin trimming data of the page, by removing the reading time that does not exceed the preset threshold value from the reading time set, and removing the final margin trimming data corresponding to the reading time that does not exceed the preset threshold value from the final margin trimming data set.

### Embodiment 4

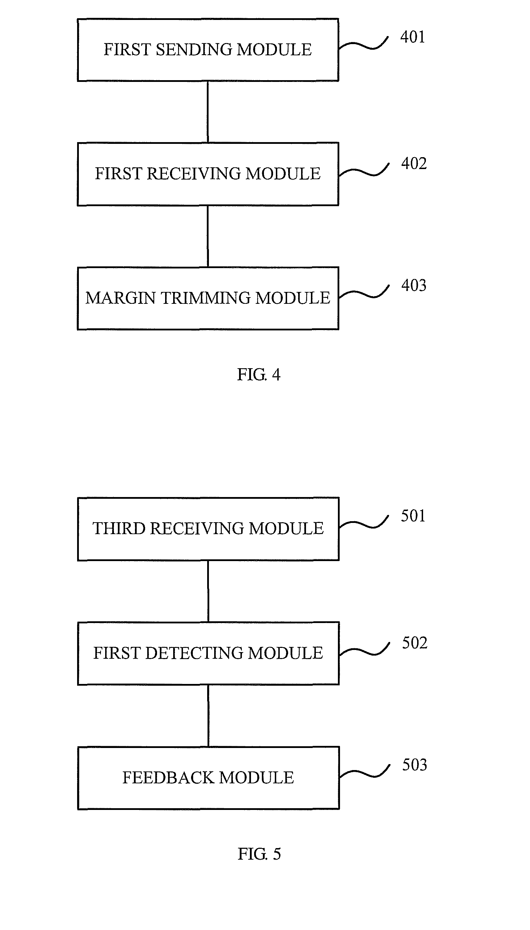

Referring to FIG. 4, which shows a structural frame diagram of a terminal provided by the embodiment 4 of the present invention, the terminal may be a smart TV, a smart phone, a tablet computer or the like. The terminal includes:
a first sending module 401 for sending a filespecification corresponding to a file including at least one page;
a first receiving module 402 for receiving a data package for trimming margins fed back according to the filespecification sent by the first sending module 401, the data package for trimming margins including a margin trimming data of at least one page of the file; and
a margin trimming module 403 for trimming the margins of the file according to the data package for trimming margins received by the first receiving module 402.

To sum up, the terminal provided by the embodiment of the present invention may directly trim the margins of the file according to the received data package for trimming margins, by the steps of sending a filespecification corresponding to a file; receiving the data package for trimming margins fed back according to the filespecification, the data package for trimming margins including a margin trimming data of at least one page of the file; and trimming the margins of the file according to the data package for trimming margins, which solves the problem that a large amount of resources are consumed by the operation of trimming the margins of the file due to the fact that a margin to be trimmed on each page of the file needs to be detected in real time according to an algorithm, thereby improving the efficiency of trimming the margins of the file.

### Embodiment 5

Referring to FIG. 5, which shows a structural frame diagram of a server provided by the embodiment 5 of the present invention, the server includes:
a third receiving module 501 for receiving a filespecification corresponding to a file including at least one page;
a first detecting module 502 for detecting whether a data package for trimming margins of the file corresponding to the filespecification received by the third receiving module 501 is present locally, the data package for trimming margins including a margin trimming data of at least one page of the file; and
a feedback module 503 for feeding back the data package for trimming margins if the first detecting module 502 detects that the data package for trimming margins of the file corresponding to the filespecification is present locally.

To sum up, the server provided by the embodiment of the present invention solves the problem that a large amount of resources are consumed by the operation of trimming the margins of the file due to the fact that a margin to be trimmed on each page of the file needs to be detected in real time according to an algorithm, thereby improving the efficiency of trimming the margins of the file, by the steps of receiving a filespecification corresponding to a file; detecting whether a data package for trimming margins of the file corresponding to the filespecification is present locally; if it is detected that the data package for trimming margins of the file corresponding to the filespecification is present locally, feeding back the data package for trimming margins such that the terminal trims the margins of the file according to the data package for trimming margins.

### Embodiment 6

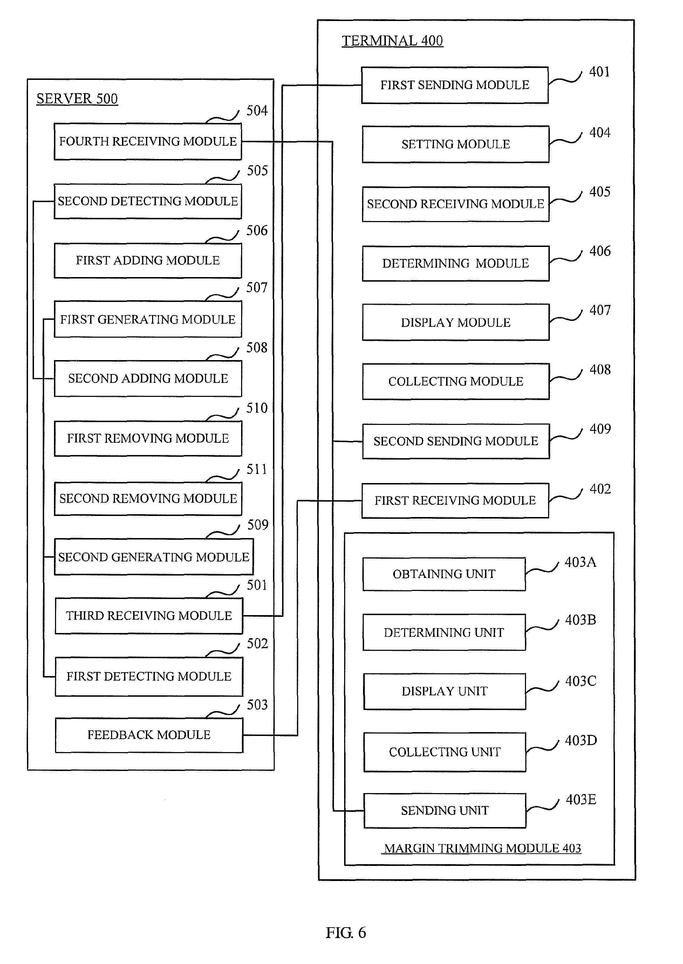

Referring to FIG. 6, which shows a structural frame diagram of a system for trimming margins of a file according to the embodiment 6 of the present invention, the system for trimming the margins of the file includes a terminal 400 and a server 500. The terminal 400 includes a first sending module 401, a first receiving module 402 and a margin trimming module 403; and the server 500 includes a third receiving module 501, a first detecting module 502 and a feedback module 503.

The first sending module 401 is used for sending a filespecification corresponding to a file including at least one page.

The third receiving module 501 is used for receiving the filespecification corresponding to the file which includes at least one page.

The first detecting module 502 is used for detecting whether a data package for trimming margins of the file corresponding to the filespecification received by the third receiving module 501 is present locally, and the data package for trimming margins includes a margin trimming data of at least one page of the file.

The feedback module 503 is used for feeding back the data package for trimming margins if the first detecting module 502 detects that the data package for trimming margins of the file corresponding to the filespecification is present locally.

The first receiving module 402 is used for receiving the data package for trimming margins fed back according to the filespecification sent by the first sending module 401, and the data package for trimming margins includes a margin trimming data of at least one page of the file.

The margin trimming module 403 is used for trimming the margins of the file according to the data package for trimming margins received by the first receiving module 402.

In another embodiment, the margin trimming data 403 may include:
an obtaining unit 403A for obtaining the margin trimming data corresponding to the current page from the data package for trimming margins, the margin trimming data including a page margin;
a determining unit 403B for determining a display area of the current page according to the page margin obtained by the obtaining unit 403A, the page margin including at least one of a left margin, a right margin, an top margin and a bottom margin; and
a display unit 403C for displaying the display area determined by the determining unit 403B.

In another embodiment, the margin trimming module 403 may further include:
a collecting unit 403D for, after displaying the display area by the display unit 403C, collecting a page information including the first three or four of the following items: the filespecification corresponding to the file which includes the current page, a page number of the current page, a final margin trimming data of the current page, and reading time for reading the current page with margins trimmed according to the final margin trimming data, the final margin trimming data being the margin trimming data corresponding to the display area; and
a sending unit 403E for sending the page information collected by the collecting unit 403D to the server 500, so as to allow the server 500 to determine the current page according to the filespecification and the page number, and re-generate the margin trimming data of the current page according to the final margin trimming data or according to the final margin trimming data and the reading time.

In this embodiment, the server 500 may further include:
a fourth receiving module 504 for, before the third receiving module 501 receives the filespecification corresponding to the file, receiving a page information of at least one page including the first three or four of the following items: the filespecification corresponding to the file which includes the page, the page number of the page, the final margin trimming data of the page, and the reading time for reading the page with margins trimmed according to the final margin trimming data of the page;
a second detecting module 505 for, with respect to the page information of each page received by the fourth receiving module 504, detecting whether the filespecification in the page information is present locally;
a first adding module 506 for adding the final margin trimming data of the page to the final margin trimming data set of the page according to the filespecification and the page number if the second detecting module 505 detects that the filespecification in the page information is present locally; and
a first generating module 507 for generating the margin trimming data of the page according to the final margin trimming data set of the page added by the first adding module 506; or
a second adding module 509 for adding the final margin trimming data of the page to the final margin trimming data set of the page, and adding the reading time to the reading time set corresponding to the final margin trimming data according to the filespecification and the page number if the second detecting module 505 detects that the filespecification of the page information is present locally; and
a second generating module 510 for generating the margin trimming data of the page according to the final margin trimming data set and the reading time set of the page added by the second adding module 509.

In another embodiment, the terminal 400 may further include:
a setting module 404 for, after the first sending module 401 sends the filespecification corresponding to the file, setting the margin trimming data of the current page if no fed back data package for trimming margins is received, the margin trimming data including a page margin;
a second receiving module 405 for receiving the margin trimming data which has been set by the setting module 404;
a determining module 406 for determining the display area of the current page according to the page margin in the set margin trimming data received by the second receiving module 405, the page margin including at least one of a left margin, a right margin, an top margin and a bottom margin; and
a display module 407 for displaying the display area determined by the determining module 406.

In another embodiment, the terminal 400 may further include:
a collecting module 408 for, after the display module 407 displays the display area, collecting a page information including the first three or four of the following items: the filespecification corresponding to the file which includes the current page, a page number of the current page, a final margin trimming data of the current page and reading time for reading the current page with margins trimmed according to the final margin trimming data, the final margin trimming data being the margin trimming data corresponding to the display area;
a second sending module 409 for sending the page information collected by the collecting module 408 to the server 500, so as to allow the server 500 to determine the current page according to the filespecification and the page number, and re-generate the margin trimming data of the current page according to the final margin trimming data or according to the final margin trimming data and the reading time;
the fourth receiving module 504 in the present embodiment for, before the third receiving module 501 receives the filespecification corresponding to the file, receiving a page information of at least one page, the page information including the first three or four of the following items: the filespecification corresponding to the file which includes the page, the page number of the page, the final margin trimming data of the page and the reading time of the page with margins trimmed according to the final margin trimming data of the page;
a second detecting module 505 for, with respect to the page information of each page received by the fourth receiving module 504, detecting whether the filespecification in the page information is present locally;
a first adding module 506 for adding the final margin trimming data to the final margin trimming data set according to the filespecification and the page number if the second detecting module 505 detects that the filespecification in the page information is present locally;
a first generating module 507 for generating the margin trimming data of the page according to the final margin trimming data set of the page added by the first adding module 506; or
a second adding module 508 for adding the final margin trimming data of the page to the final margin trimming data set of the page, and adding the reading time to the reading time set corresponding to the final margin trimming data according to the filespecification and the page number if the second detecting module 505 detects that the filespecification in the page information is present locally; and
a second generating module 509 for generating the margin trimming data of the page according to the final margin trimming data set and the reading time set added by the second adding module 508.

In another embodiment, the margin trimming data includes a page margin, and the page margin includes at least one of a left margin, a right margin, an top margin and a bottom margin; and
the first generating module 507 is used for calculating average values of the final margin trimming data corresponding to each kind of page margin in the final margin trimming data set of the page, so as to obtain the margin trimming data of the page.

In another embodiment, the server 500 may further include:
a first removing module 510 for, before the second generating module 509 generates the margin trimming data of the page according to the final margin trimming data set and the reading time set of the page, removing the reading time that does not exceed the preset threshold value from the reading time set; and
a second removing module 511 for removing the final margin trimming data corresponding to the reading time that does not exceed the preset threshold value and removed by the first removing module 510 from the final margin trimming data set.

In another embodiment, the margin trimming data includes a page margin, the page margin includes at least one of a left margin, a right margin, an top margin and a bottom margin;
the second generating module 509 is used for multiplying each group of final margin trimming data with the reading time corresponding to the final margin trimming data, and calculating average values of the final margin trimming data corresponding to each kind of page margin in the final margin trimming data set, so as to obtain the margin trimming data; or
calculating average values of the final margin trimming data corresponding to each kind of page margin in the final margin trimming data set of the page to obtain the margin trimming data of the page.

To sum up, the system for trimming margins of a file provided by the embodiment of the present invention may directly trim the margins of the file according to the received data package for trimming margins by the steps of sending a filespecification corresponding to a file to the server; receiving a data package for trimming margins fed back by the server according to the filespecification, the data package for trimming margins including a margin trimming data of at least one page of the file; and trimming the margins of the file according to the data package for trimming margins, which solves the problem that a large amount of resources are consumed by the operation of trimming the margins of the file due to the fact that a margin to be trimmed on each page of the file needs to be detected in real time according to an algorithm, thereby improving the efficiency of trimming the margin of the file. Besides, the system solves the problem that the collected final margin trimming data are inaccurate due to the final margin trimming data generated by mis-operation, and improves the accuracy of the margin trimming data of the page, by removing the reading time that does not exceed the preset threshold value from the reading time set, and removing the final margin trimming data corresponding to the reading time that does not exceed the preset threshold value from the final margin trimming data set.

It should be explained supplementarily, the above functional modules divided in the terminal and server provided by the above embodiments are just taken as example, in practical applications, the functions can be assigned to different functional modules according to requirements, namely, inner structures of the terminal, the server and the system for trimming the margins of the file may be divided into different functional modules to accomplish the whole or part of functions described above. In addition, the terminal and the server provided by the embodiments and the method for trimming the margins of the file belong to the same concept, and the detailed implementary procedure is shown in the embodiments of method, which is not repeated herein.

The sequence numbers of the above embodiments of the present invention are only for description, but do not represent sain ehe of the embodiments.

Those of ordinary skill in the art will appreciate that all of or some of the steps for implementing the above-described embodiments may be accomplished by hardware, or may be accomplished by programs instructing the associated hardware. The programs may be stored in a computer-readable storage medium, and the above-mentioned storage medium may be a read-only memory, a magnetic or optical disc, etc.

The foregoing descriptions are just preferred embodiments of the present invention, and are not intended to limit the present invention. Any modifications, equivalent substitutions, improvements and the like within the spirit and principle of the present invention should be fallen within the protection scope of the present invention.

## Claims

1. A method for trimming margins of a file, **characterized in that**, the method comprises:
sending a filespecification corresponding to a file including at least one page;
receiving a data package for trimming margins fed back according to the filespecification, the data package for trimming margins including a margin trimming data of at least one page of the file; and
trimming the margins of the file according to the data package for trimming margins.

2. The method for trimming the margins of the file according to claim 1, **characterized in that**, the trimming the margins of the file according to the data package for trimming margins comprises:
obtaining the margin trimming data corresponding to a current page from the data package for trimming margins, the margin trimming data including a page margin;
determining a display area of the current page according to the page margin, the page margin including at least one of a left margin, a right margin, an top margin and a bottom margin; and
displaying the display area.

3. The method for trimming the margins of the file according to claim 1, **characterized in that**, after the sending the filespecification corresponding to the file, the method further comprises:
setting the margin trimming data of a current page if no fed back data package for trimming margins is received, the margin trimming data including a page margin;
receiving the set margin trimming data;
determining a display area of the current page according to the page margin in the set margin trimming data, the page margin including at least one of a left margin, a right margin, an top margin and a bottom margin; and
displaying the display area.

4. The method for trimming the margins of the file according to claim 2 or 3, **characterized in that**, after the displaying the display area, the method further comprises:
collecting a page information including the first three or four of the following items: the filespecification corresponding to the file which includes the current page, a page number of the current page, a final margin trimming data of the current page, and reading time for reading the current page with margins trimmed according to the final margin trimming data, the final margin trimming data being the margin trimming data corresponding to the display area; and
sending the page information to the server, so as to allow the server to determine the current page according to the filespecification and the page number, and re-generate the margin trimming data of the current page according to the final margin trimming data or according to the final margin trimming data and the reading time.

5. A method for trimming margins of a file, **characterized in that**, the method comprises:
receiving a filespecification corresponding to a file including at least one page;
detecting whether a data package for trimming margins of the file corresponding to the filespecification is present, the data package for trimming margins including a margin trimming data of at least one page of the file; and
feeding back the data package for trimming margins if detecting that the data package for trimming margins of the file corresponding to the filespecification is present.

6. The method for trimming the margins of the file according to claim 5, **characterized in that**, before the receiving the filespecification corresponding to the file, the method further comprises:
receiving a page information of at least one page, the page information including the first three or four of the following items: the filespecification corresponding to the file which includes the page, a page number of the page, a final margin trimming data of the page, and reading time for reading the page with margins trimmed according to the final margin trimming data of the page;
detecting for the page information of each page whether the filespecification in the page information is present locally;
adding the final margin trimming data of the page to a final margin trimming data set of the page according to the filespecification and the page number if detecting that the filespecification in the page information is present locally; and
generating the margin trimming data of the page according to the final margin trimming data set of the page; or
adding the final margin trimming data of the page to the final margin trimming data set of the page, and adding the reading time to a reading time set corresponding to the final margin trimming data according to the filespecification and the page number if detecting that the filespecification in the page information is present locally; and
generating the margin trimming data of the page according to the final margin trimming data set and the reading time set of the page.

7. The method for trimming the margins of the file according to claim 6, **characterized in that**, the margin trimming data includes a page margin, the page margin includes at least one of a left margin, a right margin, an top margin and a bottom margin; and
the generating the margin trimming data of the page according to the final margin trimming data set of the page comprises:
calculating average values of the final margin trimming data corresponding to each kind of the page margin in the final margin trimming data set of the page, so as to obtain the margin trimming data of the page.

8. The method for trimming the margins of the file according to claim 6, **characterized in that**, before the generating the margin trimming data of the page according to the final margin trimming data set and the reading time set of the page, the method further comprises:
removing the reading time that does not exceed a preset threshold value from the reading time set; and
removing the final margin trimming data corresponding to the reading time that does not exceed the preset threshold value from the final margin trimming data set.

9. The method for trimming the margins of the file according to claim 6 or 8, **characterized in that**, the margin trimming data includes a page margin, the page margin includes at least one of a left margin, a right margin, an top margin and a bottom margin; and
the generating the margin trimming data of the page according to the final margin trimming data set and the reading time set of the page comprising:
multiplying each group of the final margin trimming data with the reading time corresponding to the final margin trimming data, and calculating average values of the final margin trimming data corresponding to each kind of the page margin in the multiplied final margin trimming data set respectively, so as to obtain the margin trimming data of the page; or
calculating average values of the final margin trimming data corresponding to each kind of the page margin in the final margin trimming data set of the page respectively, so as to obtain the margin trimming data of the page.

10. A terminal, **characterized in that**, the terminal comprises:
a first sending module configured for sending a filespecification corresponding to a file including at least one page;
a first receiving module configured for receiving a data package for trimming margins fed back according to the filespecification sent by the first sending module, the data package for trimming margins including a margin trimming data of at least one page of the file; and
a margin trimming module configured for trimming the margins of the file according to the data package for trimming margins received by the first receiving module.

11. The terminal according to claim 10, **characterized in that**, the margin trimming module comprises:
an obtaining unit configured for obtaining the margin trimming data corresponding to a current page from the data package for trimming margins, the margin trimming data including a page margin;
a determining unit configured for determining a display area of the current page according to the page margin obtained by the obtaining unit, the page margin including at least one of a left margin, a right margin, an top margin and a bottom margin; and
a display unit configured for displaying the display area determined by the determining unit.

12. The terminal according to claim 10 or 11, **characterized in that**, the margin trimming module further comprises:
a collecting unit configured for, after the displaying the display area by the display unit, collecting a page information including the first three or four of the following items: the filespecification corresponding to the file which includes the current page, a page number of the current page, a final margin trimming data of the current page, and reading time for reading the current page with margins trimmed according to the final margin trimming data, the final margin trimming data being the margin trimming data corresponding to the display area;
a sending unit configured for sending the page information collected by the second collecting unit to a server, so as to allow the server to determine the current page according to the filespecification and the page number, and re-generate the margin trimming data of the current page according to the final margin trimming data or according to the final margin trimming data and the reading time.

13. The terminal according to claim 10, **characterized in that**, the terminal further comprises:
a setting module configured for, after the first sending module sends the filespecification corresponding to the file, setting the margin trimming data of a current page if no fed back data package for trimming margins is received, the margin trimming data including a page margin;
a second receiving module configured for receiving the margin trimming data which has been set by the setting module;
a determining module configured for determining the display area of the current page according to the page margin of the set margin trimming data received by the second receiving module, the page margin including at least one of a left margin, a right margin, an top margin and a bottom margin; and
a display module configured for displaying the display area determined by the determining module.

14. The terminal according to claim 13, **characterized in that**, the terminal further comprises:
a collecting module configured for, after the display module displays the display area, collecting a page information including the first three or four of the following items: the filespecification corresponding to the file which includes the current page, a page number of the current page, a final margin trimming data of the current page and reading time for reading the current page with margins trimmed according to the final margin trimming data, the final margin trimming data being the margin trimming data corresponding to the display area; and
a second sending module configured for sending the page information collected by the collecting module to a server, so as to allow the server to determine the current page according to the filespecification and the page number, and re-generate the margin trimming data of the current page according to the final margin trimming data or according to the final margin trimming data and the reading time.

15. A server, **characterized in that**, the server comprises:
a third receiving module configured for receiving a filespecification corresponding to a file including at least one page;
a first detecting module configured for detecting whether a data package for trimming margins of the file corresponding to the filespecification received by the third receiving module is present locally, the data package for trimming margins including a margin trimming data of at least one page of the file; and
a feedback module configured for feeding back the data package for trimming margins if the first detecting module detects that the data package for trimming margins of the file corresponding to the filespecification is present locally.

16. The server according to claim 15, **characterized in that**, the server further comprises:
a fourth receiving module configured for, before the third receiving module receives the filespecification corresponding to the file, receiving a page information of at least one page including the first three or four of the following items: the filespecification corresponding to the file which includes the page, the page number of the page, the final margin trimming data of the page, and reading time for reading the page with margins trimmed according to the final margin trimming data of the page;
a second detecting module configured for, with respect to the page information of each page received by the fourth receiving module, detecting whether the filespecification in the page information is present locally;
a first adding module configured for adding the final margin trimming data of the page to a final margin trimming data set of the page according to the filespecification and the page number if the second detecting module detects that the filespecification in the page information is present locally; and
a first generating module configured for generating the margin trimming data of the page according to the final margin trimming data set of the page added by the first adding module; or
a second adding module configured for adding the final margin trimming data of the page to the final margin trimming data set of the page, and adding the reading time to a reading time set corresponding to the final margin trimming data according to the filespecification and the page number if the second detecting module detects that the filespecification of the page information is present locally; and
a second generating module configured for generating the margin trimming data of the page according to the final margin trimming data set and the reading time set of the page added by the second adding module.

17. The server according to claim 16, **characterized in that**, the margin trimming data includes a page margin, the page margin includes at least one of a left margin, an top margin, and a bottom margin; and
the first generating module is configured for calculating average values of the final margin trimming data corresponding to each kind of page margin in the final margin trimming data set of the page, so as to obtain the margin trimming data of the page.

18. The server according to claim 16, **characterized in that**, the server further comprises:
a first removing module configured for, before the second generating module generates the margin trimming data of the page according to the final margin trimming data set and the reading time set of the page, removing the reading time that does not exceed the preset threshold value from the reading time set; and
a second removing module configured for removing the final margin trimming data corresponding to the reading time that does not exceed the preset threshold value and removed by the first removing module from the final margin trimming data set.

19. The server according to claim 16 or 18, **characterized in that**, the margin trimming data includes a page margin, the page margin includes at least one of a left margin, an top margin, and a bottom margin; and
the second generating module is configured for multiplying each group of the final margin trimming data with the reading time corresponding to the final margin trimming data, and calculating average values of the final margin trimming data corresponding to each kind of the page margin in the final margin trimming data set, so as to obtain the margin trimming data; or
calculating average values of the final margin trimming data corresponding to each kind of the page margin in the final margin trimming data set of the page to obtain the margin trimming data of the page.
